# EUROPEAN PATENT APPLICATION

(11) **EP 2 319 648 A1**
(43) Date of publication of application: **11.05.2011**
(21) Application number: 08765486.9
(22) Date of filing: 11.06.2008
(51) Int. Cl.: B23K 9/00, E04B 1/58, F03D 11/04

(54) **FLANGE JOINT FOR STRUCTURAL MEMBER**

(71) Applicant: Mitsubishi Heavy Industries, Ltd., Tokyo 108-8215 (JP)
(72) Inventor: NUMAJIRI, Tomohiro, Nagasaki-shi Nagasaki 850-8610 (JP)
(74) Representative: Intès, Didier Gérard André
(86) International application number: PCT/JP2008/060715
(87) International publication number: WO 2009/150728

(57) **Abstract**

A flange joint for structural members is provided, wherein by avoiding stress concentration at a welded portion, the cross-sectional size can be determined based on the base material strength, and a structure can be reduced in weight and size. In a flange joint (20) for structural members, structural members are connected to each other in a state where an end face (21a), for example, of an H-shaped steel beam (21) is connected to a structural-member-connecting face (22a) of an end plate (22) by welding and a non-connection face (22b) of the end plate (22) is coupled to another structural member. The structural-member-connecting face (22a) of the end plate (22), to which the end face (21a) of the H-shaped steel beam (21) is connected, is provided with recessed grooves (23) along the shape of the welded portion of the end face (21a).

## Description

### Technical Field

The present invention relates to a flange joint for structural members, which connects (joins or couples) structural members such as H-shaped steel beams or square steel tubes that constitute, for example, a nacelle of a wind turbine generator system.

### Background Art

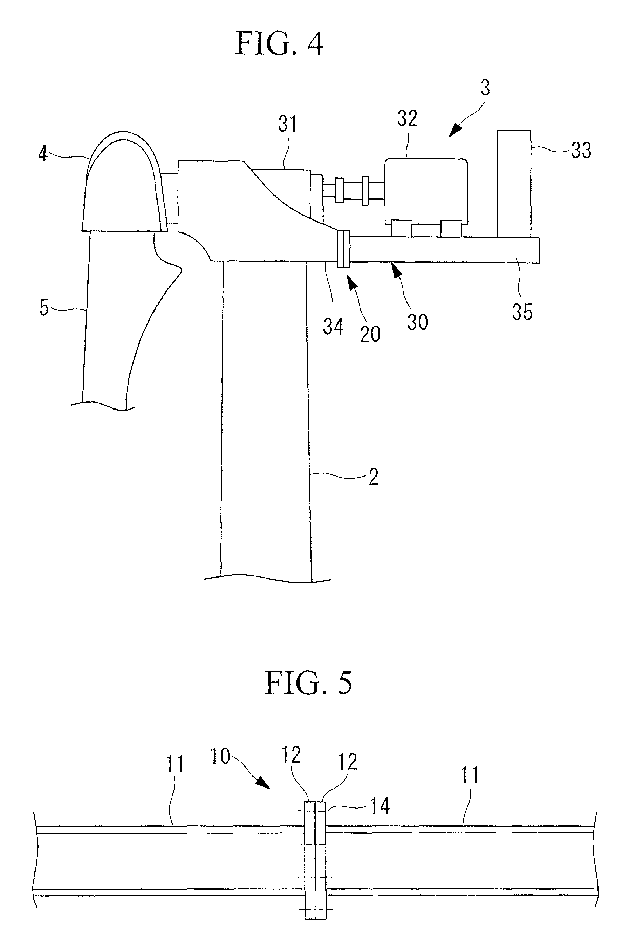

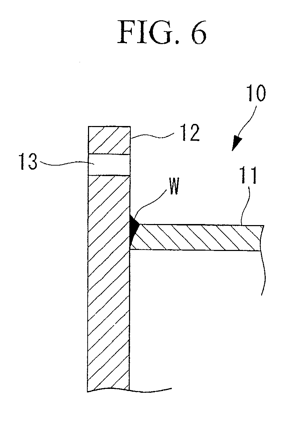

Inside a nacelle of a wind turbine generator system, for example, heavy components such as a drive train, including a gearbox and a generator, and a control panel are installed. Such a nacelle is provided with a cantilever structure in which structural members, such as H-shaped steel beams, are flange-connected.
When structural members such as H-shaped steel beams are flange-connected to each other, for example, as shown in Figs. 5 and 6, a flange joint 10 in which plate-like members (end plates) serving as flanges are attached to ends of the structural members by welding is used. In this case, the plate-like members 12 that are joined by butt welding to the ends of the H-shaped steel beams (structural members) 11 serve as flanges, and bolts 14 are inserted through a plurality of bolt holes 13 provided in both plate-like members 12 and are tightly fastened by nuts for joining them. The symbol "W" in the drawing indicates the welded portion.

In addition, known joint structures and joining processes for joining a beam formed of a structural member, such as an H-shaped steel beam, to a face of a column member include, for example, those disclosed in Patent Documents 1 and 2.
Patent Document 1: Japanese Unexamined Patent Application, Publication No. 6-126444
Patent Document 2: Japanese Unexamined Patent Application, Publication No. 7-292771

### Disclosure of Invention

Recently, wind turbine generator systems have a tendency to become larger with the increases in output. Accordingly, also in order to reduce the loads on towers, foundations, and so on, it is required to reduce the weight of nacelle baseplate structures. However, the welded portion W where a plate-like member 12 is fixed to an end face of a structural member, such as an H-shaped steel beam 11, is a portion where the cross-sectional shape of the member is changed. Such a change in the cross-sectional shape leads to the occurrence of stress concentration at the welded portion W.

Therefore, in a structure in which stress concentration occurs at the welded portion W, when the fatigue strength of a member is considered, the cross-sectional size of the structural member is determined depending on the cross-sectional shape of the welded portion W. As a result, the cross-sectional size cannot be determined on the basis of the strength of the structural member (strength of the base material), such as the H-shaped steel beam 11, and a structure that is larger than the cross-sectional size determined based on the base material strength is required. Consequently, there is a problem in that not only does the weight increase, but so does the space occupied by the steel beam.

The present invention has been accomplished under the above-mentioned circumstances, and it is an object thereof to provide a flange joint for structural members in which it is possible to determine the cross-sectional size based on the base material strength by avoiding stress concentration at the welded portion and to realize reductions in the weight and size of a structure.

The present invention employs the following solutions for solving the above-mentioned problems.
A flange joint for structural members according to the present invention is a flange joint for structural members in which the structural members are connected to each other in a state where an end face of one structural member is connected to one face of a plate-like member by welding and the other face of the plate-like member is coupled to the other structural member, wherein recessed grooves are provided on the one face, to which the end face of the one structural member is connected, of the plate-like member along the shape of a welded portion of the end face.

In such a flange joint for structural members, since the recessed grooves are provided on the one face of the plate-like member, to which the end face of the one structural member is connected, along the shape of the welded portion of the end face, the position where the cross-sectional shape of the member is changed and the position of the welded portion are displaced from each other by the depth of the recessed grooves, and the fatigue strength of the position where a cross-sectional shape of the member is changed can be evaluated based on the base material strength. The recessed grooves in this case desirably have approximately U-shaped cross sections, because of their relative ease of machining.

Another flange joint for structural members according to the present invention is a flange joint for structural members in which the structural members are connected to each other in a state where an end face of one structural member is connected to one face of a plate-like member by welding, and the other face of the plate-like member is coupled to the other structural member, wherein recessed grooves are provided on the structural-member-connecting face of the plate-like member, and the welded portion is positioned away from the T-shaped base portion formed by the plate-like member and the structural member.

In such a flange joint for structural members, since the welded portion is positioned away from the T-shaped base portion formed by the plate-like member and the structural member by forming the recessed grooves on the structural-member-connecting face of the plate-like member, the fatigue strength of the T-shaped base portion can be evaluated based on the base material strength. The recessed grooves in this case desirably have approximately U-shaped cross sections, because of their relative ease of machining.

A wind turbine generator system according to the present invention is characterized by including a joint structure for structural members according to Claim 1 or 2.
Since such a wind turbine generator system has the joint structure that enables evaluation of the fatigue strength of the position where the cross-sectional shape of the member is changed based on the base material strength, a structure, such as the nacelle baseplate, can be reduced in size and weight.

Accordingly, in the flange joint for structural members according to the present invention and the wind power generator including the same, by shifting the position where stress is concentrated from the welded portion, the cross-sectional size of the structural member can be determined based on the strength of the base material when the fatigue strength of the member is considered. That is, the cross-sectional size of a structure employing the flange joint of the present invention can be determined using the base material strength of the structural member constituted by, for example, an H-shaped steel beam. Accordingly, a structural member having a cross-sectional size smaller than that of a conventional structure, which is calculated from the strength of the welded portion, can be employed.

In other words, the flange joint of the present invention enables determination of the cross-sectional size based on the base material strength by avoiding stress concentration at the welded portion, and thereby reductions in weight and size of a structure can be realized.
This results in reductions in the weight of the structure and in the space occupied by the structural member, compared with conventional ones. Consequently, reductions in the weight and the size of a structure (for example, the nacelle baseplate of a wind turbine generator system) are possible. Furthermore, in addition to avoidance of stress concentration at the welded portion, it is possible to avoid spreading of welding distortion to the coupling faces. This has a significant benefit in terms of improved reliability of the product (for example, a wind turbine generator system).

### Brief Description of Drawings

[FIG. 1] Fig. 1 is an exploded perspective view of a flange joint for structural members according to an Embodiment of the present invention, showing a state before welding.
[FIG. 2] Fig. 2 is a longitudinal sectional view of the essential parts of the flange joint for structural members shown in Fig. 1, showing a state after welding.
[FIG. 3] Fig. 3 is a side view showing a wind turbine generator system including the flange joint according to an Embodiment of the present invention.
[FIG. 4] Fig. 4 is a diagram showing an exemplary structure of the inside of a nacelle of the wind turbine generator system shown in Fig. 3.
[FIG. 5] Fig. 5 is a diagram showing a conventional example of a flange joint for structural members.
[FIG. 6] Fig. 6 is a longitudinal sectional view showing the essential parts of a welded portion of the conventional example shown in Fig. 5.

### Explanation of Reference Signs:

- 1:: wind turbine generator system
- 3:: nacelle
- 20:: flange joint
- 21:: H-shaped steel beam (structural member)
- 22:: end plate (plate-like member)
- 23:: recessed groove
- 24:: T-shaped base portion
- 30:: nacelle baseplate
- 34:: nacelle baseplate body
- 35:: structural member
- W:: welded portion

### Best Mode for Carrying Out the Invention

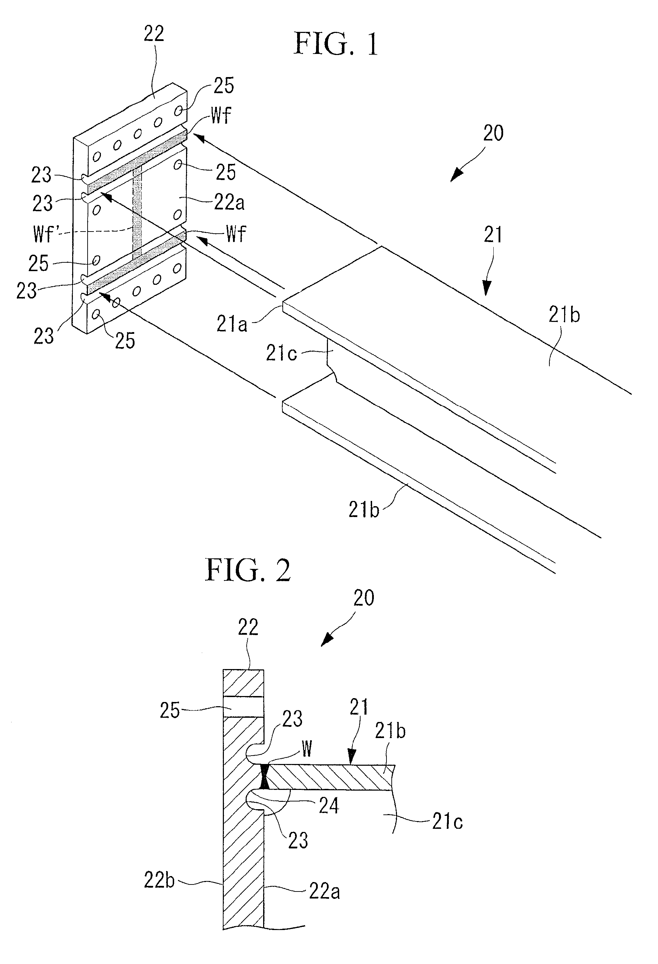

An Embodiment of the flange joint for structural members (hereinafter, referred to as "flange joint") according to the present invention will now be described with reference to Figs. 1 to 4.

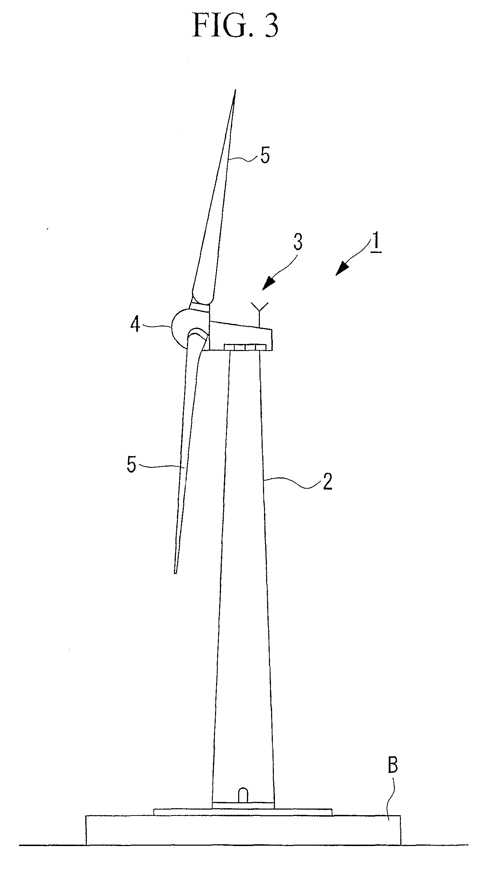

Fig. 3 is a side view showing a wind turbine generator system including the flange joint according to this Embodiment.

The wind turbine generator system 1 shown in Fig. 3 includes a tower 2 vertically installed on a foundation B, a nacelle 3 mounted atop the tower 2, and a rotor head 4 provided on the nacelle 3 so as to be rotatable around an approximately horizontal axis.
The rotor head 4 is fitted with a plurality of (for example, three) wind turbine rotor blades 5 that are arranged radially around the rotation axis thereof. By doing so, the force of wind blowing against the wind turbine rotor blades 5 from the direction of the rotation axis of the rotor head 4 is converted into motive energy causing the rotor head 4 to rotate around the rotation axis.

For example, as shown in Fig. 4, the nacelle 3 includes a nacelle baseplate 30 mounted atop the tower 2 and a cover (not shown) covering the nacelle baseplate 30 from the top. In the exemplary structure shown in the drawing, on the nacelle baseplate 30, heavy components (equipment) such as a gearbox 31, a generator 32, and a control panel 33 are provided.
The rotation of the rotor head 4, after being stepped up via the gearbox 31, drives the generator 32, resulting in generation of electricity.

Incidentally, the above-described nacelle 3 whose nacelle baseplate 30 is rotatably supported on the top end of the tower 2 can change the direction thereof according to the wind direction. This nacelle baseplate 30 includes a structural member 35, such as an H-shaped steel beam, extending from the nacelle baseplate body 34 that rotates on the tower 2 toward the opposite side with respect to the rotor head 4.
This structural member 35 is connected to the nacelle baseplate body 34 via a flange joint 20, resulting in a cantilever structure.

The above-described flange joint 20 for structural members will be described with reference to Figs. 1 and 2 below. In addition, the flange joint 20 shown in the drawings is a case employing an H-shaped steel beam 21 as the structural member 35.
In the flange joint 20, an end face 21a of the H-shaped steel beam (structural member) 21 is connected to the structural-member-connecting face (one face) 22a of an end plate (plate-like member) 22 by welding, a non-connection face (the other face) 22b of the end plate 22 is coupled to the non-connection face of another structural member, and, in this state, the structural members are connected to each other by a plurality of bolts (not shown) passing through bolt holes 25. In addition, the structural members 35 that are connected to each other are not limited to the same types of members, for example, the H-shaped steel beams 21.

The structural-member-connecting face 22a of the end plate 22 to which the end face 21a of the H-shaped steel beam 21 is connected is provided with recessed grooves 23 along the shape of the welded portion of the end face 21a. These recessed grooves 23 desirably have approximately U-shaped cross sections, because of their relative ease of machining.
In the exemplary structure shown in the drawings, employing the H-shaped steel beam 21 as the structural member, the recessed grooves 23 provided on both sides of a flange portion 21b are indispensable. However, at both sides of a web portion 21c, the strength required is small compared to that of the above-described flange portion 21b, and therefore formation of the recessed groove 23 is optional there.

That is, by forming the recessed grooves 23, the structural-member-connecting face 22a of the end plate 22 is provided with a welding face Wf having approximately the same shape (rectangle) as that of the cross-sectional shape of the flange portion 21b. The welding face Wf at a position higher than a T-shaped base portion 24 by the depth of the recessed groove 23 and the end 21a of the flange portion 21b are coupled and welded to each other. On the other hand, the end 21a of the web portion 21c is coupled and welded to a welding face Wf', which is shown by the broken line in the drawing, of the structural-member-connecting face 22a, because no recessed groove 23 is provided. However, a welding face Wf like that in the flange portion 21b may be formed, and the coupling and welding may be performed.

In other words, in the above-described flange joint 20, the structural members are connected to each other in a state where the end face 21a of the H-shaped steel beam 21 is connected to the structural-member-connecting face 22a of the end plate 22 by welding and where the non-connection face 22b of the end plate 22 is coupled to another structural member, and by providing the recessed grooves 23 on the structural-member-connecting face 22a of the end plate 22, the position of the welded portion W is located away from the T-shaped base portion 24 formed by the end plate 22 and the H-shaped steel beam 21 by a distance that is approximately equivalent to the depth of the recessed groove 23.

According to such a flange joint 20, the position where the cross-sectional shape of the H-shaped steel beam 21 is changed and the position of the welded portion Ware shifted from each other by the depth of the recessed groove 23, and thereby the fatigue strength at the position where the cross-sectional shape of the H-shaped steel beam 21 is changed can be evaluated based on the base material strength of the end plate 22. That is, in the above-described flange joint 20, the recessed grooves 23 are provided on the structural-member-connecting face 22a of the end plate 22, which allows the position of the welded portion W to be located away from the T-shaped base portion 24. Therefore, the fatigue strength of the T-shaped base portion 24, which is the position where the cross-sectional shape of the H-shaped steel beam 21 is changed, can be evaluated based on the base material strength of the end plate 22 where the T-shaped base portion 24 is provided.

Therefore, in the above-described flange joint 20, by shifting the position (T-shaped base portion 24) where stress is concentrated from the position of the welded portion W, when the fatigue strength of the structural member 35 such as the H-shaped steel beam 21 or the end plate 22 is considered, the cross-sectional size of the structural member 35 can be determined based on the strength of the base material. That is, the cross-sectional size of a structure, such as the nacelle base plate 30, employing the flange joint 20 of the present invention can be determined using the base material strength of the structural member 35 constituted by, for example, the H-shaped steel beam 21 and the end plate 22. Accordingly, a structural member 35 having a cross-sectional size smaller than that of a conventional structure, which is calculated from the strength of the welded portion W, can be employed

Thus, by providing the recessed grooves 23 on the structural-member-connecting face 22a of the end plate 22 for providing the welded portion W at a position away from the end plate 22 and the T-shaped base portion 24 of the flange joint 20, the fatigue evaluation of the T-shaped base portion 24 can be performed with the base material strength of the end plate 22, and the welded portion W can be evaluated as a welded structure in which a plate and a plate are coupled and welded to each other.
In general, when the amount of weld penetration of the welded portion W in general rolled steel is in the same range, even if the same raw material is used, the fatigue strength varies depending on whether the pattern (including weld leg length) of the welded structure is a T-shaped or flat coupling, and the fatigue strength of a flat coupling structure is larger than that of a T-shape one.

That is, in the flange joint 20 of the present invention, stress concentration at the welded portion W is avoided to allow the cross-sectional size to be determined based on the base material strength, resulting in reductions in weight and size of a structure having the flange joint 20.
This can decrease the weight of the structure and the space occupied by the structural member, and thereby the structure, such as the nacelle baseplate 30 of the wind turbine generator system 1, can be reduced in weight and size.

Furthermore, in the above-described flange joint 20, stress concentration at the welded portion W can be avoided, and also welding distortion can be prevented from spreading to the structural-member-connecting face 22a, which becomes a connection face, and the non-connection face 22b of the end plate 22. Consequently, for example, product reliability of the wind turbine generator system 1 and other apparatuses can be improved.

Incidentally, in the above-described Embodiment, application of the flange joint 20 of the present invention to a nacelle baseplate 30 of a wind turbine generator system 1 is described, but the application is not limited thereto, and various types of application are possible. In addition, the structural member 35 that is welded to the end plate 22 is not limited to the above-described H-shaped steel beam 21, and it is understood that application to other structural members such as channel steel members and angled steel members is possible.
Furthermore, the present invention is not limited to the above-described Embodiment and can be appropriately modified without departing from the gist of the present invention.

## Claims

1. A flange joint for structural members, connecting structural members to each other in a state where an end face of one structural member is connected to one face of a plate-like member by welding and the other face of the plate-like member is coupled to the other structural member, wherein
recessed grooves are provided on the one face, to which the end face of the structural member is connected, of the plate-like member along the shape of a welded portion of the end face.

2. A flange joint for structural members, connecting structural members to each other in a state where an end face of one structural member is connected to one face of a plate-like member by welding and the other face of the plate-like member is coupled to the other structural member, wherein
recessed grooves are provided on the structural-member-connecting face of the plate-like member, and the welded portion is positioned away from the T-shaped base portion formed by the plate-like member and the structural member.

3. A wind turbine generator system comprising a joint structure for structural members according to Claim 1 or 2.
